# EUROPÄISCHE PATENTANMELDUNG

(11) **EP 0 557 757 A1**
(43) Veröffentlichungstag der Anmeldung: **01.09.1993**
(21) Anmeldenummer: 93101735.4
(22) Anmeldetag: 04.02.1993
(51) Int. Cl.: B23K 9/173

(54) **Engspaltschweissen nach dem MAG-Lichtbogenschweissverfahren**

(30) Priorität: 27.02.1992 DE 4206105
(71) Anmelder: Linde Aktiengesellschaft, D-65189 Wiesbaden (DE)
(72) Erfinder: Stenke, Viktor, Dipl.-Ing., W-8000 München 21 (DE)
(74) Vertreter: Schaefer, Gerhard, Dr.

(57) **Zusammenfassung**

Es handelt sich um ein verfahren zum Enspaltschweißen mit dem MAG-Schweißverfahren, wobei die Schweißeinrichtung in der Schweißfuge geführt und eine abschmelzende Elektrode unter Schutzgas mit einer bestimmten Drahtvorschub-Geschwindigkeit der Schweißstelle zugeführt wird. Bei bekannten Verfahren wird hierbei die Schweißung dadurch verbessert, daß Kontaktrohr und zugehörige Elektrode mechanisch bewegt werden, wozu besondere mechanische Einrichtungen vorhanden sind. Diese Einrichtungen sind jedoch aufwendig und störungsanfällig. Erfindungsgemäß wird deshalb vorgeschlagen, daß die Parameter Schweißstrom, Elektrodendraht-Vorschub und Kontaktrohrabstand derart eingestellt werden, daß der übliche axiale Werkstoffübergang durch einen rotieren Werkstoffübergang mit rotierendem Lichtbogen abgelöst wird, und so ohne zusätzliche Mechanik ein gutes Schweißergebnis erzielt wird.

## Beschreibung

Die Erfindung betrifft ein Verfahren zum Engspaltschweißen mit dem MAG-Lichtbogenschweißverfahren.

Beim Verbinden dicker Bleche tritt die besonders schwierige Schweißsituation des Engspaltschweißens auf. Hierbei stellt die vorhandene tiefe Schweißfuge und die dort einzuführende Schweißpistole sowie die schwierig einzustellende Position der abschmelzenden Elektrode gegenüber den zu verschweißenden Werkstückwänden die Schwierigkeit dar. Als Folge dieser schwierigen Ausgangssituation ergeben sich leicht Bindefehler und Poren in der zu fertigenden Schweißnaht, andererseits tritt beim Schweißprozeß selbst häufig ein turbulenter, spritzender Materialübergang auf.

Für eine gute Schweißqualität beim Engspaltschweißen sollte insbesondere der zwischen Elektrode und Werkstück zu erzeugende Lichtbogen sich abwechselnd nach beiden Seiten zu den zu verschweißenden Wänden ausbilden. Dieser Mechanismus wird bei bekannten Engspalt-Verfahren z.B.durch Rotation des Schweißpistolen-Kontaktrohres, durch Pendeln des Drahtvorschubes oder durch andere mechanisch bewirkte Bewegungen der Schweißelektrode erzielt. Beispielsweise wird in DVS-Berichte, Band 68, 1981, eine durch Knicken des Elektrodendrahtes verursachte Elektrodenpendelbewegung vorgeschlagen. Bislang arbeiten alle bekannten verfahren zum Engspaltschweißen mittels mechanischer Einrichtungen, die ein regelmäßiges örtliches Bewegen der Schweißelektrode verursachen. Dieses mechanischen Zusatzeinrichtungen für Schweißapparaturen stellen störungsanfällige und komplizierte Elemente dar, die häufig Ursache von Betriebsunterbrechungen sind.

Aufgabenstellung zu vorliegender Erfindung ist daher, eine Engspaltschweißmöglichkeit anzugeben, die diesen Umstand verbessert bzw. besagte Nachteile in verbindung mit mechanischen Zusatzeinrichtungen minimiert oder insgesamt vermeidet.

Erfindungsgemäß wird zur Lösung dieser Aufgabe vorgeschlagen, eine Engspaltschweißung ohne mechanisch bewirkte Elektrodenbewegung durchzuführen und zwar derart, daß die Parameter Schweißstrom, Elektrodendraht-Vorschub und Kontaktrohrabstand derart eingestellt werden, daß der übliche axiale Werkstoffübergang durch einen rotieren Werkstoffübergang mit rotierendem Lichtbogen abgelöst wird.

Die Erfindung beruht auf dem Gedanken, einen an sich bekannten Lichtbogeneffekt, nämlich den des Rotationslichtbogens, speziell beim Engspaltschweißen einzusetzen und dabei dessen Bewegungseigenschaft zur Beseitigung der geschilderten Nachteile und zur Ausbildung einer hochwertigen Schweißnaht zu nutzen. Dieses vorgehen hat sich tatsächlich als vorteilhaft erwiesen. Der erwünschte Rotationslichtbogen wird dadurch erhalten, daß - im Vergleich zu zugehörigen Standard-Engspaltschweißverfahren - ein erhöhter Schweißstrom von 330 bis 600 A vorgesehen wird, gleichzeitig eine ebenfalls erhöhte Vorschubgeschwindigkeit für den Elektrodendraht von mehr als 20 m/min eingestellt und zudem ein um 25 bis 75 % vergrößerter Kontaktrohrabstand eingehalten wird.

Schweißströme liegen beim Engspaltschweißen gängigerweise unterhalb 300 A, wobei Drahtvorschübe unter 20 m/min zur Anwendung kommen und der Kontaktrohrabstand 15 bis 20 mm beträgt. Mit den erfindungsgemäßen Einstellungen wird im Gegensatz zu diesen Einstellungen in aller Regel der erwünschte, vorteilhafte Rotationslichtbogen erzielt, der die zu verbindenden Werkstückflanken in günstiger Weise aufschmilzt.

Mit Vorteil wird hierbei darüber hinaus ein Schweißvorschub von mehr als 30 cm/min. eingestellt, welcher vergleichsweise groß, mit den erfindungsgemäßen Einstellungen jedoch ohne weiteres zulässig und günstig für die Gesamtwirtschaftlichkeit des Verfahrens ist.

Das erfindungsgemäße verfahren ist vor allem bezogen auf Drahtelektrodendurchmesser zwischen 1 und 1.6 mm, wobei größere Elektrodendurchmesser in der Tendenz mit höheren Stromstärken verknüpft sind.

Mit Vorteil wird zur Verfahrensausführung ein Schweiß-Schutzgas, das überwiegend aus Argon und/oder Helium besteht und das außerdem noch bis zu 15 Vol% C0₂ und/oder O₂ enthält, eingesetzt.

Wird eine Engspaltschweißung in der beschriebenen Weise ausgeführt, entsteht in den dabei auftretenden Schweißfugen - 8 bis 12 mm Fugenbreite bei 20 bis 300 mm Tiefe - ein ohne weitere Maßnahmen sich ständig bewegender, um die Elektrodenspitze rotierender Lichtbogen, der von einem eben solchen Werkstückübergang begleitet ist. Dieser rotierende Lichtbogen bewirkt die gewünschte und notwendige Aufschmelzung beider, zu verbindender Werkstückflanken, ohne daß hierzu ein Bewegen des Elektrodendrahtes und entsprechende Zusatzeinrichtungen erfordlich sind. Weitere Vorteile und Effekte sind der spritzerarme Schweißvorgang, die gute Schweißqualität sowie die Erhöhung der Schweißleistung und somit der Wirtschaftlichkeit.

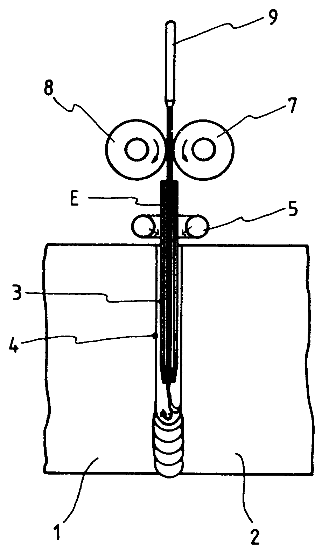

Im folgenden soll das erfindungsgemäße Verfahren an einem Beispiel näher erläutert werden:
Die Figur zeigt hierzu einen entsprechenden Schweißvorgang im Schnitt.

Zwei dicke Bleche 1, 2 aus Baustahl sollen mit dem erfindungsgemäßen Verfahren verschweißt werden. Dazu wird das Kontaktrohr 3 einer Engspaltschweißeinrichtung, in dem auch die Drahtelektrode E geführt wird, in die zwischen den Werkstücken bestehende Schweißfuge 4 eingeführt. Oberhalb der Schweißfuge und das Kontaktrohr 3 umgebend ist eine Ringleitung 5 für eine Schutzgaszufuhr oberhalb der Schweißfuge angeordnet. Die Austrittsöffnungen aus der Ringleitung 5 sind dabei zur Schweißfuge hin orientiert, um das Schweißschutzgas bevorzugt der Schweißfuge zuzuführen. Zu beiden Seiten des Kontaktrohres (in der Figur nicht sichtbar!) sind zudem in die Schweißfuge 4 hinein reichende Schutzgaszufuhrlanzen vorhanden. Über der Ringleitung 5 ist die Elektrodendrahtzuführung mit Vorschubrollen 7, 8 und einer Drahtführung 9 angeordnet.

Zur Durchführung der Verschweißung ist nun eine kontinuierliche Schweißstromstärke von 400 A mit einer zugehörigen Schweißspannung von ca. 30 bis 40 V anzuwenden. Der Drahtvorschub wird auf 25 bis 30 m/min eingestellt und ein Kontaktrohrabstand von 25 mm vorgesehen. Mit einer Schweißvorschubgeschwinigkeit von ca. 40 cm/min sind dann die einzelnen Schweißlagen auftragbar. Zur vollständigen Ausführung der verschweißung ist die Schweißfuge 4 vollständig mit Schweißlagen, also mit Schweißwerkstoff aufzufüllen. Im gesamten Ablauf wird dabei über die Ringleitung 5 und die nicht gezeigten, dem Kontaktrohr 3 der Drahtelekrode E vor- und nachlaufenden Schutzgaslanzen Schutzgas zugeführt. Ein hierzu besonders geeignetes Schutzgas ist eine Mischung aus 4% O₂, 5% CO₂ und im verbleibenden Argon. Als abschmelzende Elektrode ist mit Vorteil eine Baustahlelektrode der Qualität SG 2 (nach DIN 8559) einzusetzen.

Unter Einhaltung dieser Parameter wird eine qualitativ hochwertige Schweißverbindung ohne störungsanfällige Schweißapparatur und mit günstiger Wirtschaflichkeit erzielt.

## Patentansprüche

1. Verfahren zum Enspaltschweißen mit dem MAG-Schweißverfahren,
bei dem die Schweißeinrichtung in der Schweißfuge geführt und dabei eine abschmelzende Elektrode unter Schutzgas mit einer bestimmten Drahtvorschub-Geschwindigkeit der Schweißstelle zugeführt wird,
**dadurch gekennzeichnet,**
daß die Parameter Schweißstrom, Elektrodendraht-Vorschub und Kontaktrohrabstand derart eingestellt werden, daß der übliche axiale Werkstoffübergang durch einen rotieren Werkstoffübergang mit rotierendem Lichtbogen abgelöst wird.

2. Verfahren nach Anspruch 1, dadurch gekennzeichnet, daß - im Vergleich zu zugehörigen Standard-Engspaltschweißverfahren -
ein erhöhter Schweißstrom von 330 bis 600 A vorgesehen wird,
gleichzeitig eine ebenfalls erhöhte Vorschubgeschwindigkeit für den Elektrodendraht von mehr als 20 m/min eingestellt und
zudem ein um 25 bis 75 % vergrößerter Kontaktrohrabstand eingehalten wird.

3. Verfahren nach einem der Ansprüche 1 bis 2, dadurch gekennzeichnet, daß Elektrodendurchmesser zwischen 1 und 1.6 mm zur Anwendung kommen, wobei größere Elektrodendurchmesser in der Tendenz mit höheren Stromstarken verknüpft sind.

4. Verfahren nach einem der Ansprüche 1 bis 3, dadurch gekennzeichnet, daß ein Schweißvorschub von mehr als 30 cm/min. angewendet wird.

5. Verfahren nach einem der Ansprüche 1 bis 4, dadurch gekennzeichnet, daß ein überwiegend aus Argon und/oder Helium bestehendes Schutzgas, das außerdem bis
zu 15 Vol% C0₂
und/oder O₂ enthält,
eingesetzt wird.
